# EUROPEAN PATENT SPECIFICATION

(11) **EP 0 864 054 B1**
(45) Date of publication and mention of the grant of the patent: **09.04.2003**
(21) Application number: 96941278.2
(22) Date of filing: 29.11.1996
(51) Int. Cl.: F16D 66/00, B60T 13/02

(54) **INDICATION MEANS IN A BRAKE CYLINDER FOR A VEHICLE BRAKE**
ANZEIGEMITTEL IN EINEM BREMSZYLINDER FÜR EINE FAHRZEUGBREMSE
TEMOIN DE CYLINDRE DE FREIN DESTINE A UN FREIN DE VEHICULE

(30) Priority: 30.11.1995 SE 9504306; 04.12.1995 SE 9504355
(43) Date of publication of application: 16.09.1998
(73) Proprietor: AB VOLVO, 405 08 Göteborg (SE)
(72) Inventor: ANGERFORS, Dan, S-448 31 Floda (SE)
(74) Representative: Andersson, Per Rune
(86) International application number: SE9601572
(87) International publication number: WO97020153

(56) References cited:
- EP-A- 0 025 559
- WO-A-80/01370
- WO-A-96/12634
- DE-A- 1 950 443
- DE-A- 2 363 268
- SE-A- 9 101 292

## Description

### TECHNICAL FIELD:

The present invention refers to an indication means in a brake cylinder for a vehicle brake and particularly a pneumatic vehicle brake for heavy vehicles with a spring activated parking brake which, when necessary, can be released mechanically during service.

### BACKGROUND OF THE INVENTION:

When servicing and repairing heavy vehicles it is possible to, when necessary, mechanically release the parking brake of the vehicle. Heavy vehicles are normally equipped with pneumatically activated brake systems, where the brakes when driving thus are activated by means of compressed air. In conventional brake systems the parking brake is activated by letting the compressed air out of the system, thereby causing a pressure spring to actuate a piston in a brake cylinder for activation of the brake to the parking brake position. Without compressed air in the brake system the parking brake is thus normally activated.

In an earlier, common type of brake cylinder, it is possible to mechanically release the parking brake of the vehicle during service and repair of the vehicle, by unscrewing a release screw in the rear gable of the brake cylinder. This release screw, by means of a head at its one end, brings the piston with it and thereby compresses the pressure spring so that the parking brake is released and put out of function. From the safety point of view, it is of the utmost importance that service and repair personnel can carry out a visual control of the brake cylinder, in order to unambiguously determine whether the parking brake is activated or has been mechanically released, and is thus not activated. In this case, the visual control is done simply by checking wether the release screw is in its screwed out position or not, i.e. if it significantly protrudes from the gable of the brake cylinder. In this kind of brake cylinder a clear indication is thus obtained as to wether the parking brake is activated or not.

The above described protruding release screw however, has the disadvantage of demanding a relatively large free space adjacent to the gable of the brake cylinder, in order to be screwed out to its full length. Since the space available is extremely limited in the area around the wheel suspension in chassis of modern transport vehicles, another known solution is often used, where the release screw instead is axially locked in the brake cylinder and the piston is brought out by a rotationally locked, moving nut which has been screwed on to the release screw. The advantage of this solution is that the release screw stays within the brake cylinder, and thus only a screw head for the manipulation of the release screw is located outside of the brake cylinder during the entire release sequence. A serious safety problem with such a solution however, is that no external and visually observable indication of the activation status of the parking brake (i.e. function/non-function) is obtained. This fact can for example cause service personnel to mistakenly think that the parking brake is fully activated, when it in reality might be only partially activated, and in the process of letting go which might lead to unexpected and undesired movement, of the vehicle, with a risk for serious injuries to personnel and surrounding equipment.

A prior known vehicle brake is disclosed in DE 1 950 443 A1. The known device has an activating element movable in two directions for activating and deactivating the brake.

### SUMMARY OF THE INVENTION:

The invention solves these problems by providing an indication means in a brake cylinder for a vehicle brake according to patent claim 1.

By the invention an indication means is thus provided which gives a clear indication of the activation status of the parking brake, so that the risk of accidents during service or repair of heavy vehicles can be minimized.

The other characteristics and advantages of the invention will become obvious from the following description of a preferred embodiment.

### BRIEF DESCRIPTION OF THE DRAWINGS:

The invention will in the following be described using an example of an embodiment, with reference to the appended drawing in which:
- Fig. 1: shows a cut cross-section of a brake cylinder with an indication means according to a preferred embodiment of the invention, where the parking brake is in an active state and
- Fig. 2: shows the same view but with the parking brake in a partially released position, with the indication body in a protruding position.

### DESCRIPTION OF A PREFERRED EMBODIMENT:

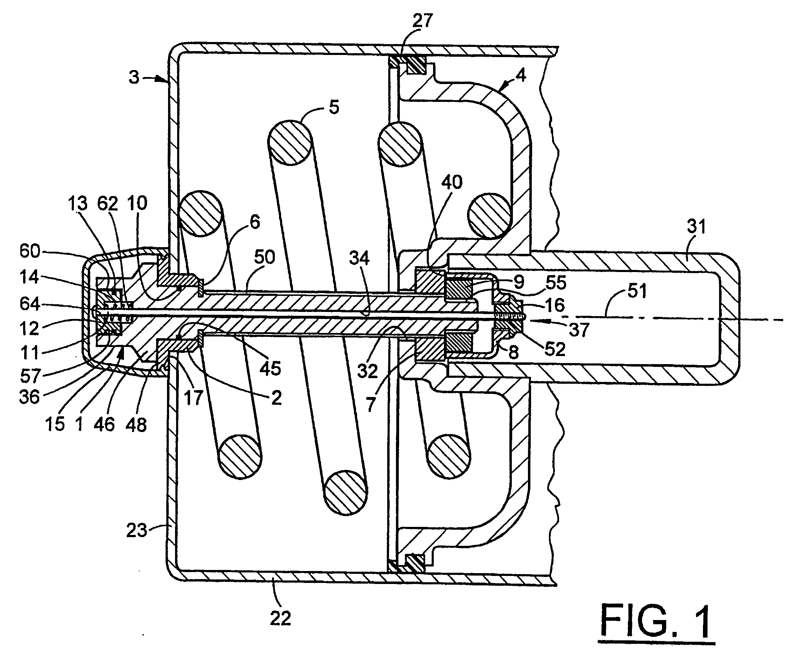

In Fig. 1 the reference numeral 1 denotes a release screw for the mechanical release of the parking brake in a brake cylinder for a vehicle brake with a spring activated parking brake. The release screw 1 is provided with an indication means according to the invention, which enables an external visual control of whether the parking brake is activated or whether it has been mechanically released and thus deactivated.

The brake cylinder is of the pneumatic kind and is shown in a cut view, where e.g. the connections for compressed air have not been shown. The rest of the brake cylinder is of a well known kind, for which reason it will not be described in detail here. From Fig. 1 it can be seen that the brake cylinder comprises a cylinder housing 3 with a casing wall 22 an a gable 23. A rotationally locked piston 4 equipped with organs 31 for the activation of the brake runs inside the cylinder housing 3. The brake is not shown, but can for example be of a commonly known disc brake kind, with brake caliper and brake linings. The piston is sealed against the casing wall 22 of the cylinder housing 3 by means of a piston sealing 27 of a suitable elastic material.

A pressure spring 5, also called parking spring, of the spiral kind is positioned between the piston 4 and the gable 23 of the cylinder housing 3 in order to activate the parking brake by mechanically influencing the piston 4.

A release screw 1 for the mechanical release of the parking brake is at a first end-section rotatably mounted in the cylinder housing 3 via a liner 2. The liner 2 has been fixed to the cylinder housing 3 by pressing. An O-ring seals between the release screw 1 and the liner 2 (and thereby the cylinder housing 3) in order to achieve good protection of all internal parts of the spring brake cylinder against intrusion of moisture and dirt and accompanying corrosion. The O-ring 10 is positioned in a thread 45 which is circumferential around the release screw. The release screw 1 is axially locked against movement relative to the gable 23 of the cylinder housing 3 by means of a circumferential flange 46 and a locking ring 6, which prevents the release screw 1 from slipping out when it is not under pressure. The release screw 1 extends at said first end outside of the cylinder housing 3 in which place it has said flange 46 and a screw head 36 of for example hexagonal shape for use of a suitable torque tool to turn the release screw 1. The liner 2 has an outer flange 48 which is equipped with a thread 17 for snap-attachment of a protective hat 15, suitably made of plastic, which detachably covers and protects the screw head 36 and of course also constitutes an extra protection against the intrusion of moisture and dirt into the cylinder housing 3. The protecting hat 15 also has a further safety function which will be described later in this description. The release screw 1 extends axially through the centre line of the pressure spring 5 and at a second end-section it runs freely through a throughbore 32 in the piston 4. The release screw 1 is provided with an external thread 50 which extends along the main length of the screw.

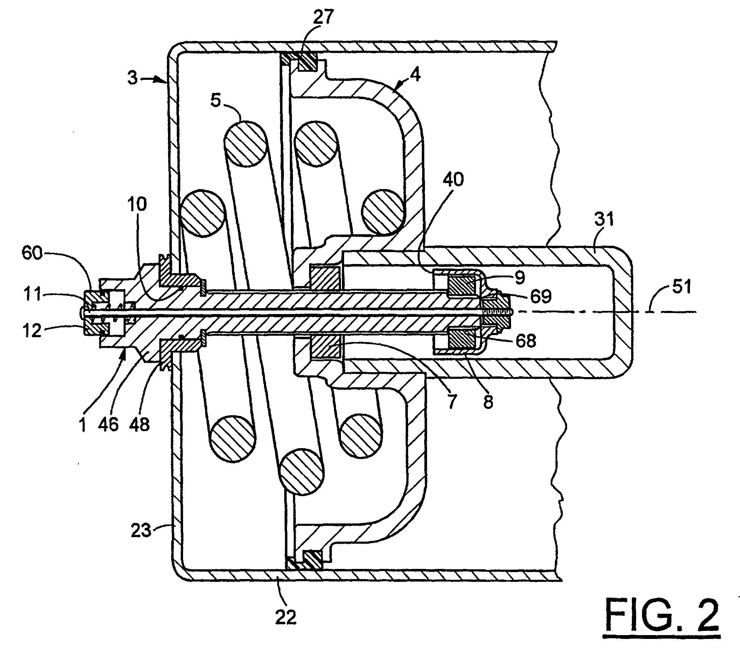

A moving nut 7 is screwed onto said release screw 1. The nut 7 has an internal thread and on its peripheral outside is of non-round shape, in the example shown a hexagonal shape, in order to lock it rotationally in relation to the piston 4 by means of a corresponding shape in the piston 4. In Fig. 1 the nut 7 is shown in an outer end position at a set distance from the gable 23 of the cylinder housing. The moving nut 7 is arranged to, through contact with the piston 4, bring the piston with it in the axial direction of the release screw 1 when turning the release screw 1 by manipulation of the screw head 36. In so doing, the pressure spring 5 is also compressed, as can be seen in Fig. 2.

The release screw 1 is according to the invention provided with a throughbore 34 which extends in co-parallel with the symmetry axis 51 of the screw 1. A bar 11 extends freely through the bore 34 where it is axially displaceable relative to the release screw 1. The term bar is here intended to include both solid bars and hollow pipes. The bar 11 is at a first end 37, located within the cylinder housing 3, equipped with a position sensing body, which in the embodiment shown consists of a nut 16 which has been screwed onto the bar 11 by means of a thread 52, and a hexagonal casing 8 which has been threaded onto an external thread 53 of the nut 16. The position sensing body is thus axially fixed to the bar 11. The hexagonal casing 8 which is part of the position sensing body has a circumferential contact surface 40 for contact against the nut 7, as can clearly be seen in Fig. 1. In an alternate, not shown embodiment, the hexagonal casing 8 and the nut 16 can be made in one piece. The hexagonal casing 8 is, in the example shown, locked against rotation relative to the release screw 1 by means of a hexagonal nut 9 which also serves as an end stop for the moving nut 7. The nut 9 has been threaded onto the release screw via a thread 55, which is separate from the thread 50. For the basic function of the position sensing body 8, 16, it is not, as will be described below, necessary that it is locked against rotation relative to the release screw 1.

The bar 11 is at a second end equipped with an indication body in the shape of a piston 12, arranged to visibly protrude out of the screw head 36 of the release screw 1 in case of axial displacement of the bar 11, caused by axial displacement of the nut 7 from its outer end position, and of the contact surface 40 of the hexagonal casing 16, which surface is in contact with the nut, during rotation of the release screw 1 for mechanical release of the parking brake.

In the preferred and shown embodiment the piston 12 is, during normal operating function of the brake cylinder, completely lowered into a surrounding recess 57 in the screw head 36. Immediately when the nut 7 leaves its outer end position the piston 12 will protrude from the recess 57. The piston 12 is preferably coloured in a strong warning colour, preferably red, so that service personnel will obtain a clear visual warning-signal when the parking brake has been mechanically released. The piston 12 is sealed with an O-ring 13 against the wall of the recess 57.

The contact surface 40 of the hexagonal nut 8 is here brought to move with the axial movement of the moving nut 7 through spring pressure from a spiral-spring 14 which at its one end is in contact with a seat 62 in the screw head 36 and which at its other end is in contact with the piston 12.

The bar 11 has been fitted into a hole 64 in the piston 12 with press-fitting, for which reason the piston 12, in the example shown, is locked against axial movement relative to the bar 11.

It is not possible for the protecting hat 15 to snap-attach to the thread 17 of the liner 2 if the piston 12 is in its protruding position, as shown in Fig. 2. Thus, the protective hat 15 also has an important safety-function, as well as providing protection against moisture and dirt, since the service personnel is not allowed to ignore the warning piston 12 when the protective hat is put back into place.

In Fig. 2 it can be seen that the hexagonal nut 8 also has contact surfaces 68 for contact against the end surface 69 of the release screw 1. In this way the axial movement of the bar 11 is limited in such a way that the indication body (the piston 12) is not permitted to entirely slip out of the recess 57 in the screw head 36.

## Claims

1. Indication means in a brake cylinder for a vehicle brake with a spring activated parking brake, where said brake cylinder comprises:
a cylinder housing (3) with a casing wall (22) and at least one gable (23);
a piston (4) running in said cylinder housing (3) for activation of the brake;
a pressure spring (5) positioned between the piston (4) and the gable (23) of the cylinder housing for activating the parking brake by mechanically influencing the piston (4);
a release screw (1) axially locked against movement relative to the gable (23) for the mechanical release of the parking brake, which at a first end-section is rotatably mounted in the cylinder housing (3) and which has a screw head (36) on the outside of the cylinder housing and which at a second end-section runs freely in a throughbore (32) in the piston (4),
a rotationally locked, moving nut (7) threaded onto said release screw (1), where said nut has an outer end position at a set distance from said gable (23) and is arranged to, through contact against the piston (4), bring this in the axial direction of the release screw (1) when turning the release screw by manipulation of the screw head (36),
and
a relative to the release screw (1) axially displaceable bar (11) arranged in a throughbore (34) in the release screw (1);
wherein the bar (11) at a first end (37), located within the cylinder housing (3), has a position sensing body (8, 16) which is axially fixed to the bar (11) and provided with a contact surface (40) for contact against the nut (7);
and wherein the bar (11) at a second end has an indication body (12) arranged to visibly protrude out of the screw head (36) of the release screw (1) in case of axial displacement of the bar (11) caused by axial displacement of the nut (7) from its outer end position, and of the contact surface (40) of the position sensing body (8, 16), which surface is in contact with the nut, during rotation of the release screw (1) for mechanical release of the parking brake.

2. Indication means in a brake cylinder according to claim 1, wherein said indication body (12) is arranged to be, in its entirety, lowered into a recess (57) in the screw head (36) of said release screw (1).

3. Indication means in a brake cylinder according to claim 2, wherein said indication body (12) has a cylindrical shape with an enveloping surface (60) which has a strong warning colour.

4. Indication means in a brake cylinder according to claim 1, wherein the contact surface (40) of the position sensing body (8, 16) is brought to accompany the axial displacement of the moving nut (7) through spring pressure.

## Patentansprüche

1. Anzeigeeinrichtung in einem Bremszylinder für eine Fahrzeugbremse mit einer durch eine Feder aktivierte Parkbremse, wobei zu dem Bremszylinder gehören:
ein Zylindergehäuse (3) mit einer Gehäusewand (2) und wenigstens einer Stirnwand (23);
ein Kolben (4), der in dem Zylindergehäuse (3) zur Betätigung der Bremse läuft;
eine Druckfeder (5), die zwischen dem Kolben (4) und der Stirnwand (23) des Zylindergehäuses zur Aktivierung der Parkbremse durch mechanische Beeinflussung des Kolbens (4) angeordnet ist;
eine Löseschraube (1), die in axialer Richtung gegen eine Bewegung relativ zu der Stirnwand (23) für das mechanische Lösen der Parkbremse arretiert ist, welche mit einem ersten Endabschnitt drehbar in dem Zylindergehäuse (3) montiert ist und die einen Schraubenkopf (36) an der Außenseite des Hintergehäuses besitzt und die an einer zweiten Einstellung frei in einem Durchgangsloch (32) in dem Kolben (4) läuft;
eine gegen Drehung arretierte Bewegungsmutter (7), die auf die Löseschraube (1) aufgeschraubt ist, wobei die Mutter eine äußere Einstellung in einer eingestellten Entfernung von der Stirnwand (23) besitzt und durch Kontakte gegen Kolben (4) diesen in axialer Richtung der Löseschraube (1) zu bringen vermag, wenn die Löseschraube durch Drehung des Schraubenkopfes (6) gedreht wird; und
eine relativ zu der Löseschraube (1) axial verlagerbare Stange (11), die in einer Durchgangsbohrung (34) in der Löseschraube angeordnet ist;
wobei die Stange (11) an einem ersten Ende (37), das innerhalb des Zylindergehäuses (3) angeordnet ist, einen Positionsfühlkörper (8,16) aufweist, der axial in der Stange (11) befestigt und mit einer Kontaktfläche (40) zum Kontaktieren der Mutter (7) versehen ist;
und wobei die Stange (11) an einem zweiten Ende einen Anzeigekörper (12) besitzt, der für ein sichtbares Vorstehen aus dem Schraubenkopf (36) der Löseschraube (1) für den Fall einer axialen Verlagerung der Stange (11) vorgesehen ist, die durch eine Verlagerung der Mutter (7) aus ihrer äußeren Einstellung und von der Kontaktfläche (40) des Positionsfühlkörpers (8,16) verursacht wird, welche in Berührung mit der Mutter während der Drehung der Löseschraube (1) zur mechanischen Freigabe der Parkbremse ist.

2. Anzeigeeinrichtung in einem Bremszylinder gemäß Anspruch 1, bei der der Anzeigekörper (12) in seiner Gesamtheit in eine Ausnehmung (57) in dem Schraubenkopf (36) der Löseschraube (1) versenkbar ist.

3. Anzeigeeinrichtung in einem Bremszylinder nach Anspruch 2, bei der der Anzeigekörper (12) eine zylindrische Form mit einer Hüllfläche (60) aufweist, die eine starke Warnfarbe besitzt.

4. Anzeigeeinrichtung in einem Bremszylinder nach Anspruch 1, bei der durch Federdruck die Axialverlagerung der sich bewegenden Mutter (7) durch die Kontaktfläche (40) des Positionsfühlkörper (8,16) begleitbar ist. gebracht ist.

## Revendications

1. Moyens indicateurs d'un cylindre de frein de frein de véhicule ayant un frein de stationnement actionné par ressort, où ledit cylindre de frein comporte :
un boîtier de cylindre (3) ayant une paroi de carter (22) et au moins une paroi d'extrémité (23),
un piston (4) se déplaçant dans ledit boîtier de cylindre (3) pour activer le frein,
un ressort de pression (5) positionné entre le piston (4) et la paroi d'extrémité (23) du boîtier de cylindre pour activer le frein de stationnement en influençant mécaniquement le piston (4),
une vis de desserrage (1) bloquée axialement à l'encontre d'un déplacement par rapport à la paroi d'extrémité (23) pour le desserrage mécanique du frein de stationnement, qui, au niveau d'un premier tronçon d'extrémité, est montée de manière rotative dans le boîtier de cylindre (3) et qui a une tête de vis (33) située sur l'extérieur du boîtier de cylindre et qui, au niveau d'un second tronçon d'extrémité, s'étend librement dans un alésage traversant (32) du piston (4),
un écrou mobile (7) bloqué en rotation, vissé sur ladite vis de desserrage (1), ledit écrou ayant une position d'extrémité extérieure située à une distance fixée par rapport à ladite paroi d'extrémité (23) et étant agencé pour, par l'intermédiaire d'un contact contre le piston (4), amener celui-ci dans la direction axiale de la vis de desserrage (1) lorsqu'on tourne la vis de desserrage par manipulation de la tête de vis (36), et
une barre (11) pouvant être déplacée axialement par rapport à la vis de desserrage (1), agencée dans un alésage traversant (34) de la vis de desserrage (1),
dans lesquels la barre (11) a une première extrémité (37), située dans le boîtier de cylindre (3), a un corps de détection de position (8, 16) qui est axialement fixé sur la barre (11) et muni d'une surface de contact (40) destinée à venir en contact contre l'écrou (7),
et dans lesquels la barre (11) à une seconde extrémité a un corps d'indication (12) agencé pour être vu en saillie à l'extérieur de la tête de vis (33) de la vis de desserrage (1) dans le cas d'un déplacement axial de la barre (11) provoqué par un déplacement axial de l'écrou (7) à partir de sa position d'extrémité extérieure, et de la surface de contact (40) du corps de détection de position (8, 16), laquelle surface est en contact avec l'écrou, pendant une rotation de la vis de desserrage (1) pour un desserrage mécanique du frein de stationnement.

2. Moyens indicateurs d'un cylindre de frein selon la revendication 1, dans lesquels ledit corps d'indication (12) est agencé pour être, dans sa totalité, abaissé dans un évidement (57) de la tête de vis (36) de ladite vis de desserrage (1).

3. Moyens indicateurs d'un cylindre de frein selon la revendication 2, dans lesquels ledit corps d'indication (12) a une forme cylindrique ayant une surface enveloppante (60) qui a une forte couleur d'alarme.

4. Moyens indicateurs d'un cylindre de frein selon la revendication 1, dans lesquels la surface de contact (40) du corps de détection de position (8, 16) est amenée à accompagner le déplacement axial de l'écrou mobile (7) par l'intermédiaire de la pression de ressort.
